# EUROPÄISCHE PATENTANMELDUNG

(11) **EP 4 579 520 A1**
(43) Veröffentlichungstag der Anmeldung: **02.07.2025**
(21) Anmeldenummer: 23220712.6
(22) Anmeldetag: 29.12.2023
(51) Int. Cl.: G06K 7/04, G06K 7/08, G06K 7/10

(54) **EIN- UND AUSGABEGERÄT**

(71) Anmelder: Three -2- one interaktive Medien GmbH, 47798 Krefeld (DE)
(72) Erfinder: Pressel, Jörg, 47800 Krefeld (DE)
(74) Vertreter: Dr. Stark & Partner Patentanwälte mbB

(57) **Zusammenfassung**

Die Erfindung betrifft ein Ein- und Ausgabegerät (1). Um ein Ein- und Ausgabegerät (1) zu schaffen, das eine erleichterte Handhabung und einen geringeren Aufwand bei der Auswahl und Bereitstellung der Datenträger (4) ermöglicht, wird angegeben ein Ein- und Ausgabegerät (1), umfassend ein Gehäuse (2), in dem zumindest eine elektronische Sensoreinheit (3), eine elektronische Steuereinheit (15), eine Speichereinheit und wenigstens eine Ausgabeeinheit vorgesehen sind, wobei die Sensoreinheit (3) zum Auslesen von wenigstens zwei hintereinander angeordneten Datenträgern (4) ausgebildet ist, wobei jeder Datenträger (4) mit durch die Sensoreinheit (3) auslesbaren Informationen im Binärformat versehen ist und insoweit sowohl für den Sensor transparente Bereiche als auch für den Sensor intransparente Bereiche aufweist, und wobei die Steuereinheit (15) mit der Sensoreinheit (3), der Speichereinheit und der Ausgabeeinheit verbunden ist, wobei weiterhin in der Speichereinheit zumindest Zuordnungen von durch die Sensoreinheit (3) erfassbaren Informationen und damit verknüpften Aktionen hinterlegt sind, wobei weiterhin die Steuereinheit zumindest zum Empfang und zur Auswertung der von der Sensoreinheit (3) erfassten Informationen unter Berücksichtigung der in der Speichereinheit hinterlegten Zuordnungen ausgebildet ist, und wobei die Ausgabeeinheit zur Tätigung einer Ausgabe entsprechend der in der Speichereinheit für die von der Sensoreinheit (3) erfassten Informationen hinterlegten Aktion ausgebildet ist, und die Steuereinheit (15) zur Steuerung der Ausgabe durch die Ausgabeeinheit ausgebildet ist, wobei weiterhin das Gehäuse (2) wenigstens eine derart ausgebildete Datenträgereinführöffnung (16) aufweist, dass durch die Datenträgereinführöffnung (16) hindurch wenigstens zwei Datenträger (4) zumindest partiell so in das Gehäuse (2) einführbar sind, dass diese flächig hintereinander angeordnet sind und die darauf hinterlegten Informationen von der Sensoreinheit (3) auslesbar sind.

## Beschreibung

Die Erfindung betrifft ein Ein- und Ausgabegerät.

Aus der Praxis sind Ein- und Ausgabegeräte bekannt, die zum Auslesen eines Datenträgers mit im Binärformat versehenen Informationen ausgebildet sind. Ein Beispiel hierfür ist ein Lochkartenleser. Als Lochkartenleser wird ein Peripheriegerät eines zugeordneten Computers verstanden, welches Lochkarten als Datenträger liest und ihren Inhalt diesem Computer zur Verfügung stellt. Eine Lochkarte kann beispielsweise ein aus stabilem dünnem Karton gefertigter Datenträger sein, der in der Datenverarbeitung zur Speicherung von Daten und Programmen verwendet wird. Die Informationen werden in einem Binärformat in Form von Ausstanzungen, beispielsweise Löchern, abgebildet, welche mithilfe von elektro-mechanischen Sensoren in dem Lochkartenleser ausgelesen werden können.

Nachteilig hierbei ist, dass die Informationen des eingeführten Datenträgers nicht angepasst werden können. Ein Datenträger, beispielsweise eine gestanzte Lochkarte, hat immer exakt dieselben Informationen und ist für sich unveränderbar. Sollen von den Informationen dieses Datenträgers abweichende Informationen eingegeben werden, muss ein weiterer Datenträger verwendet werden. Der erste Datenträger muss dann aus dem Ein- und Ausgabegerät entnommen und der weitere Datenträger eingeführt werden. Dies hat insbesondere zur Folge, dass einerseits eine Vielzahl an Datenträgern benötigt wird, um verschiedene Informationen eingeben zu können und andererseits die Handhabung des Ein- und Ausgabegeräts kompliziert und fehleranfällig ist. Vor allem die Auswahl des korrekten Datenträgers und die notwendige Bereitstellung unzähliger Datenträger sind aufwändig und bereits deshalb nachteilig.

Aufgabe der Erfindung ist es, die vorgenannten Nachteile zu vermeiden und ein Ein- und Ausgabegerät anzugeben, das eine erleichterte Handhabung und einen geringeren Aufwand bei der Auswahl und Bereitstellung der Datenträger ermöglicht.

Diese Aufgabe wird gelöst durch ein Ein- und Ausgabegerät, umfassend ein Gehäuse, in dem zumindest eine elektronische Sensoreinheit, eine elektronische Steuereinheit, eine Speichereinheit und wenigstens eine Ausgabeeinheit vorgesehen sind, wobei die Sensoreinheit zum Auslesen von wenigstens zwei hintereinander angeordneten Datenträgern ausgebildet ist, wobei jeder Datenträger mit durch die Sensoreinheit auslesbaren Informationen im Binärformat versehen ist und insoweit sowohl für den Sensor transparente Bereiche als auch für den Sensor intransparente Bereiche aufweist, und wobei die Steuereinheit mit der Sensoreinheit, der Speichereinheit und der Ausgabeeinheit verbunden ist, wobei weiterhin in der Speichereinheit zumindest Zuordnungen von durch die Sensoreinheit erfassbaren Informationen und damit verknüpften Aktionen hinterlegt sind, wobei weiterhin die Steuereinheit zumindest zum Empfang und zur Auswertung der von der Sensoreinheit erfassten Informationen unter Berücksichtigung der in der Speichereinheit hinterlegten Zuordnungen ausgebildet ist, und wobei die Ausgabeeinheit zur Tätigung einer Ausgabe entsprechend der in der Speichereinheit für die von der Sensoreinheit erfassten Informationen hinterlegten Aktion ausgebildet ist, und die Steuereinheit zur Steuerung der Ausgabe durch die Ausgabeeinheit ausgebildet ist, wobei weiterhin das Gehäuse wenigstens eine derart ausgebildete Datenträgereinführöffnung aufweist, dass durch die Datenträgereinführöffnung hindurch wenigstens zwei Datenträger zumindest partiell so in das Gehäuse einführbar sind, dass diese flächig hintereinander angeordnet sind und die darauf hinterlegten Informationen von der Sensoreinheit auslesbar sind.

Bei einem solchen Ein- und Ausgabegerät kann ein Datenträger, beispielweise eine Karte aus Karton in etwa der Größe einer Kreditkarte, durch die Datenträgereinführöffnung in dem Gehäuse des Ein- und Ausgabegeräts in selbiges eingeführt werden. Die auf dem Datenträger vorgesehenen Informationen können nach dem Einführen des Datenträgers von der Sensoreinheit ausgelesen werden. Die auf dem Datenträger vorgesehenen Informationen können insbesondere gleichzeitig von der Sensoreinheit ausgelesen werden. Ist der Datenträger beispielsweise als Lochkarte mit einer auf einer Fläche angeordneten Matrix von Datenpunkten ausgebildet, so kann die Sensoreinheit beispielsweise als elektro-mechanischer Tastsensor ausgebildet sein. Ein solcher Tastsensor kann die jeweilige Ausgestaltung und somit die jeweilige Information eines Datenpunktes "ertasten". Ein Datenpunkt hat in diesem Beispiel ein Binärformat, also zwei mögliche Ausgestaltungen. Er kann entweder ausgestanzt oder aber nicht ausgestanzt sein. Es ist auch denkbar, dass die Sensoreinheit eine optische Wirkweise aufweist und den Datenpunkt optisch ausliest. Insofern würde eine Sensoreinheit mit optischer Wirkweise ebenfalls erkennen, ob ein Datenpunkt ausgestanzt oder nicht ausgestanzt ist. Die jeweilige Ausgestaltung lässt sich beispielsweise an Unterschieden in Farbton und/oder Helligkeit der Datenpunkte erkennen. Bei einer optischen Sensoreinheit ist beispielsweise auch denkbar, dass die Datenträger insgesamt transparent sind und die jeweiligen Datenpunkte dieses Datenträgers entweder ebenfalls transparent oder aber intransparent beschichtet oder bedruckt ausgestaltet sind. Durch die Steuereinheit werden die von der Sensoreinheit erfassten Informationen ausgewertet. Die Informationen werden dabei mit den in der Speichereinheiten hinterlegten Zuordnungen abgeglichen. Eine Zuordnung ist beispielsweise eine Kombination aus einer bestimmten, von der Sensoreinheit erfassten Information und einer dieser Information zugehörigen Aktion. Die Steuereinheit vergleicht die von der Sensoreinheit erfassten Informationen mit den in den Zuordnungen hinterlegten Informationen und führt die den jeweiligen Informationen zugeordnete Aktion aus. Eine solche Aktion kann beispielsweise die Tätigung einer Ausgabe durch die Ausgabeeinheit sein.

Ein erfindungsgemäßes Ein- und Ausgabegerät ist derart ausgestaltet, dass die Datenträgereinführöffnung einerseits das gleichzeitige Einführen zweier Datenträger ermöglicht und andererseits die Gesamtheit der Informationen von beiden Datenträgern durch die Sensoreinheit ausgelesen werden können. Im zuvor ausgeführten Beispiel können etwa zwei Lochkarten flächig hintereinander so angeordnet sein, dass sich die Datenpunkte dieser Lochkarten genau überlagern. Auf diese Weise können die Informationen verschiedener Datenträger kombiniert und summiert werden.

Bei einer weiteren beispielhaften Ausführungsform bei zwei Datenträgern mit derselben, z. B. als dieselbe Matrix ausgebildeten, Anordnung an Datenpunkten kann die Hälfte der Datenpunkte des einen Datenträgers ausgestanzt sein und die exakt gegenteilige zweite Hälfte der Datenpunkte des zweiten Datenträgers kann ebenfalls ausgestanzt sein. Wenn diese Datenträger exakt übereinander liegen, sodass sich die jeweiligen Datenpunkte überlagern, so verdecken die nicht ausgestanzten Datenpunkte des einen Datenträgers die ausgestanzten Datenpunkte des anderen Datenträgers und umgekehrt. So kann durch die Kombination beider Datenträger dieselbe Information eines einzelnen Datenträgers abgebildet werden, der überhaupt keine Ausstanzungen hat. In dieser Weise können zwei oder mehr Datenträger miteinander kombiniert werden, um unterschiedliche Gesamt-Informationen einzugeben. Durch eine geringe Anzahl an verschiedenen Datenträgern kann somit eine Vielzahl an möglichen Informationen und auch Kombinationen von auf unterschiedlichen Datenträgern vorhandenen Informationen abgebildet werden.

Vorteilhafterweise kann die Ausgabeeinheit zumindest eine mit der Steuereinheit verbundene optische Signaleinheit umfassen, die vorzugsweise durch eine LED oder eine elektronische Anzeige wie ein LCD- oder LED-Display gebildet sein kann, wobei zumindest eine in der Speichereinheit hinterlegte Aktion ein durch die Signaleinheit(en) auszugebendes optisches Signal umfassen kann. Eine derartige optische Signaleinheit kann beispielsweise als LED-Matrix ausgebildet sein, mittels welcher Buchstaben und Zahlen angezeigt werden können. Ein optisches Signal könnte beispielsweise darin bestehen, dass diejenigen LED der LED-Matrix aktiviert werden, die zusammen betrachtet ein bestimmtes Wort buchstabieren. Es wäre überdies auch eine farbliche Ausgabe oder ein in einem speziellen Takt ausgeführtes Blinken oder Aufleuchten denkbar.

Zudem kann die Ausgabeeinheit zumindest eine mit der Steuereinheit verbundene akustische Signaleinheit, die vorzugsweise durch einen Lautsprecher gebildet ist, umfassen, wobei zumindest eine in der Speichereinheit hinterlegte Aktion ein durch die Signaleinheit(en) auszugebendes akustisches Signal umfasst. Ist eine derartige akustische Signaleinheit als Lautsprecher ausgebildet, kann eine in der Speichereinheit hinterlegte Aktion beispielsweise die Ausgabe eines Musiktitels, eines bestimmten Signaltons oder auch einer Hinweis- bzw. Warnmeldung über diese akustische Signaleinheit sein. Insofern kann beispielsweise eine akustische Bestätigung über das erfolgreiche Auslesen eines eingeführten Datenträgers erfolgen.

Weiterhin kann die Sensoreinheit wenigstens eine elektronische optische Erfassungseinheit, beispielsweise eine elektronische Kamera, umfassen. Mittels der Erfassungseinheit können die Datenpunkte eines oder mehrerer Datenträger erfasst werden. Eine Ausgestaltung als elektronische Kamera hat unter anderem den Vorteil, dass eine präzise Aufnahme der Datenpunkte eines oder mehrerer Datenträger möglich ist. Zudem hat eine elektronische Kamera keine beweglichen Bauteile und ist insofern weniger anfällig gegenüber äußeren Einflüssen und Beschädigungen durch äußere Einwirkungen. Darüber hinaus kann mittels einer elektronischen Kamera eine hohe Geschwindigkeit der Auslesung der Informationen eines Datenträgers erreicht werden.

In einer bevorzugten Ausführungsform kann das Gehäuse derart abgedunkelt, vorzugsweise lichtdicht abgeschlossen, sein, dass zumindest in den Bereich, in dem die Sensoreinheit die Informationen erfasst, kaum oder gar kein von außerhalb des Gehäuses in das Innere des Gehäuses eingedrungenes Licht vorhanden ist. Durch eine Abdunklung des Inneren des Gehäuses kann erreicht werden, dass kein Licht von außen die Erfassung der Informationen der Datenträger beeinflusst. Insbesondere bei Sensoreinheiten mit optischem Wirkmechanismus können Einflüsse von außen das Auslesen der auf den Datenträgern gespeicherten Informationen erschweren. Insofern kann beispielsweise der Farbton eines Datenpunktes oder mehrerer Datenpunkte durch einfallendes Licht von außen beeinflusst werden.

Vorteilhafterweise kann die Sensoreinheit zumindest ein elektrisches, vorzugsweise als LED ausgebildetes, Leuchtmittel umfassen. Ein derartiges Leuchtmittel kann beispielsweise als LED ausgebildet sein, wobei mehrere solcher Leuchtmittel als LED-Matrix angeordnet sein können. Besonders vorteilhaft ist es, wenn die Anordnung der einzelnen LED in der LED-Matrix an die Datenpunkte der Datenträger angepasst ist. Beispielsweise bei einer Lochkarte kann es vorteilhaft sein, jedem Datenpunkt ein als LED ausgebildetes Leuchtmittel zuzuordnen, das möglichst nah an dem jeweiligen Datenpunkt einer eingeführten Lochkarte angeordnet ist. Durch eine derartige Anordnung kann ein ausgestanzter Datenpunkt von dem ihm zugeordneten, als LED ausgebildeten, Leuchtmittel vollkommen durchleuchtet werden. Es ist ebenfalls denkbar, dass ein einzelnes Leuchtmittel alle ausgestanzten Datenpunkte durchleuchtet.

Zumindest ein elektrisches Leuchtmittel kann so angeordnet sein, dass sämtliche durch die Datenträgereinführöffnung bzw. die Datenträgereinführöffnungen zumindest partiell in das Gehäuse eingeführte Datenträger sich jeweils zwischen diesem Leuchtmittel bzw. diesen Leuchtmitteln und wenigstens einer elektronischen optischen Erfassungseinheit angeordnet befinden. So kann beispielsweise bei einer Ausgestaltung der Datenträger als Lochkarte eine LED-Matrix, die aus mehreren, nebeneinander angeordneten und jeweils als LED ausgebildeten Leuchtmitteln besteht, auf der einen Seite der eingeführten Datenträger angeordnet sein. Diese LED-Matrix kann Licht durch jede Ausstanzung der Lochkarte(n) werfen, welches von der auf der gegenüberliegenden anderen Seite der eingeführten Datenträger angeordneten elektronischen optischen Erfassungseinheit erfasst werden kann. Auch bei einer Ausgestaltung eines Datenträgers als transparente Karte mit intransparent beschichteten oder bedruckten Datenpunkten erleichtert eine solche Anordnung die Erfassbarkeit von intransparenten Datenpunkten durch die elektronische optische Erfassungseinheit. Bei einer solchen Ausgestaltung umschließen das Leuchtmittel und die optische Erfassungseinheit insofern die Datenträger, wobei das von dem Leuchtmittel emittierte Licht durch die Datenträger hindurch strahlt und anschließend von der optischen Erfassungseinheit erfasst wird.

Weiterhin können mehrere Leuchtmittel vorgesehen sein, die einzeln aktivierbar sind, und die Steuereinheit kann zur einzelnen, vorzugsweise sequentiellen, Aktivierung der Leuchtmittel ausgebildet sein. Eine derartige Ausgestaltung ist insbesondere bei Verwendung einer aus mehreren, nebeneinander angeordneten und als LED ausgebildeten Leuchtmitteln bestehenden LED-Matrix vorteilhaft, bei welcher die einzelnen LED unmittelbar an den Datenpunkten der eingeführten Datenträger angeordnet sind. Durch die sequentielle Aktivierung kann bei einer derartigen Ausgestaltung vermieden werden, dass das von einer LED emittierte Licht durch mehrere Datenpunkte, also beispielsweise durch mehrere Ausstanzungen, auf die Seite der Erfassungseinheit scheint und somit die Auslesbarkeit der Datenträger beeinträchtigt.

Die Sensoreinheit kann zudem wenigstens einen ein elektrisches Feld aufbauenden kapazitiven Sensor umfassen. Mittels eines kapazitiven Sensors kann die Anwesenheit von Materialien durch die Messung von Veränderungen in der Kapazität eines elektrischen Feldes erkannt werden. Insofern kann ein kapazitiver Sensor ebenfalls ohne bewegliche und somit äußeren Einflüssen ausgesetzte Teile feststellen, ob ein Datenpunkt beispielsweise ausgestanzt oder nicht ausgestanzt ausgebildet ist. Ein kapazitiver Sensor misst die Kapazität eines elektrischen Feldes, welche von der in diesem elektrischen Feld vorliegenden Dielektrizitätskonstante abhängt. Die Dielektrizitätskonstante in dem Bereich des Datenpunktes ist unterschiedlich, wenn in diesem Bereich entweder Luft oder aber ein Material, nämlich das eines Datenträgers, vorhanden ist. Insofern ist auch die Kapazität eines elektrischen Feldes im Bereich eines Datenpunktes abhängig davon, ob sich ein Material, beispielsweise Karton oder Kunststoff, oder lediglich Luft sich in diesem Bereich befindet. Insofern kann präzise und schnell die Ausgestaltung eines Datenpunktes eines Datenträgers ausgelesen werden, sofern die unterschiedlichen Ausgestaltungen sich durch unterschiedliche Materialien im Datenpunkt auszeichnen. Dies kann beispielsweise bei Ausgestaltungen in Form von Ausstanzungen oder in Form von Beschichtungen der Fall sein.

Bei einer bevorzugten Ausführungsform kann die Sensoreinheit wenigstens einen ein elektrisches Feld aufbauenden kapazitiven Sensor umfassen, wobei wenigstens ein kapazitiver Sensor so angeordnet ist, dass sich zumindest ein durch die Öffnung bzw. die Öffnungen zumindest partiell in das Gehäuse eingeführter Datenträger, vorzugsweise zumindest zwei durch die Öffnung bzw. die Öffnungen zumindest partiell in das Gehäuse eingeführte Datenträger und ganz bevorzugt sämtliche durch die Öffnung bzw. die Öffnungen zumindest partiell in das Gehäuse eingeführte Datenträger, in dem von diesem kapazitiven Sensor aufgebauten elektrischen Feld befindet bzw. befinden. Bei einer solchen Ausgestaltung ist sichergestellt, dass wenigsten ein Datenpunkt eines Datenträgers in dem elektrischen Feld wenigstens eines kapazitiven Sensors befindlich ist. Insofern kann präzise und schnell die Ausgestaltung eines Datenpunktes eines Datenträgers ausgelesen werden, sofern die unterschiedlichen Ausgestaltungen sich durch unterschiedliche Materialien im Datenpunkt auszeichnen. Dies kann beispielsweise bei Ausgestaltungen in Form von Ausstanzungen oder in Form von Beschichtungen der Fall sein. Für die Erfassung mehrerer Datenpunkte sind entsprechend mehrere kapazitive Sensoren an entsprechenden Positionen vorzusehen.

Die Erfindung betrifft weiterhin ein Set mit mehreren durch eine Sensoreinheit auslesbaren, vorzugsweise optisch auslesbaren, vorteilhafterweise gleichformatigen, flächigen Datenträgern, vorzugsweise rechteckig mit zwei Längskanten und zwei Querkanten ausgebildeten Lochkarten oder transparenten Karten mit partiellem Aufdruck.

Aufgabe der Erfindung ist es, ein Set anzugeben, das eine erleichterte Handhabung und einen geringeren Aufwand bei der Auswahl und Bereitstellung der Datenträger ermöglicht. Ein solches Set kann beispielsweise Datenträger aufweisen, die unterschiedliche Aktionen auslösen. So könnte beispielsweise innerhalb eines Sets ein Datenträger das Abspielen eines bestimmten Musikstückes auslösen. Innerhalb desselben Sets könnte ein weiterer Datenträger die Lautstärke der Tonausgabe auf einen bestimmten Wert festsetzen. Ein dritter Datenträger desselben Sets könnte wiederum eine Wiederholung des Musikstückes auslösen, sobald dieses abgespielt wurde.

Die vorgenannte Aufgabe wird bei einem gattungsgemäßen Set dadurch gelöst, dass die Datenträger jeweils eine Vielzahl an jeweils an identischen Positionen angeordneten Datenpunkten aufweisen, die gegenüber dem Rest des Datenträgers von einer Sensoreinheit detektierbar sind, so dass zumindest zwei Datenträger hintereinander angeordnet werden können und durch die nicht als Datenpunkt ausgebildeten Bereiche einer ersten Karte hindurch die jeweils als Datenpunkt ausgebildeten Bereiche einer hinter dieser ersten Karte deckungsgleich vorgesehenen weiteren Karte detektierbar sind, wobei die Datenträger des Sets zur Verwendung mit einem Ein- und Ausgabegerät nach einem der vorhergehenden Ausführungsformen ausgebildet sind. Insofern können die Datenpunkte mehrerer, hintereinander angeordneter Datenträger durch eine einzelne Sensoreinheit ausgelesen werden, sofern es die Ausgestaltung des jeweiligen Datenpunktes erlaubt. Die Ausgestaltung zumindest einer der beiden hintereinanderliegenden Datenpunkte zweier hintereinanderliegender Datenträger muss für die Sensoreinheit transparent ausgebildet sein, so dass die Sensoreinheit durch diesen Datenpunkt hindurch die Ausgestaltung des dahinterliegenden intransparenten Datenpunktes des anderen Datenträgers auslesen kann.

Vorteilhafterweise kann ein Teilbereich der Gesamtheit der Datenpunkte jedes Datenträgers als Identifikationsbereich ausgebildet sein, wobei der Identifikationsbereich jedes Datenträgers dieses Sets identisch ausgebildet ist, so dass die Zugehörigkeit bzw. Nicht-Zugehörigkeit der einzelnen Datenträger zu einem Set detektierbar ist. Es kann dadurch bei einer Kombination von Datenträgern unterschiedlicher Sets in diesem Bereich eine Information entstehen, die von der Steuereinheit als ungültig ausgewertet wird.

Zudem können die Datenpunkte in zwei oder mehr nebeneinander angeordneten Spalten und/oder in zwei oder mehr untereinander angeordneten Reihen vorgesehen sein. Insofern kann beispielsweise eine zweidimensionale Matrix aus Datenpunkten vorliegen. Dabei können die Spalten und/oder Reihen regelmäßig angeordnet sein oder zumindest teilweise versetzt zueinander vorgesehen sein.

Die Datenpunkte können als transparente Bereiche, vorzugsweise Löcher, in einem ansonsten intransparenten Datenträger ausgebildet sein oder als intransparente, vorzugsweise durch Bedruckung oder aufgeklebte Elemente gebildete, Bereiche auf einem ansonsten transparenten Datenträger ausgebildet sein.

Weiterhin können die Datenträger jeweils mit zumindest einer Kennzeichnung versehen sein, welche die durch diesen Datenträger zu steuernde(n) Funktion(en) bzw. Aktion(en) und/oder dessen hinterlegte(n) Information(en) visualisieren, wobei die Kennzeichnung vorzugsweise an einem Kantenbereich vorgesehen ist. Eine derartige Kennzeichnung kann beispielsweise durch einen scherenschnittartigen Vorsprung an der Außenkontur gebildet sein, welcher bei eingeführtem Datenträger außerhalb des Gehäuses des Ein- und Ausgabegerätes befindlich bleibt und damit von außen sichtbar ist. Eine solche Kennzeichnung ermöglicht dem jeweiligen Anwender einen schnellen Überblick darüber, welche Datenträger aktuell ausgelesen bzw. gegebenenfalls kombiniert sind. Insofern kann eine derartige Kennzeichnung beispielsweise mit Symbolen oder Buchstaben bedruckt sein. Es ist ebenfalls denkbar, dass die Außenkontur einer solchen Kennzeichnung derart ausgestaltet ist, dass sie selbst ein Symbol darstellt.

Vorteilhafterweise kann die Gesamtheit der Datenpunkte in verschiedene Teilbereiche aufgeteilt sein, die jeweils der Steuerung unterschiedlicher Funktionen zugeordnet sind, wobei vorzugsweise jeder Datenträger lediglich eine einzige Funktion oder aber mehrere miteinander zusammenhängende Funktionen steuert. Es kann beispielsweise ein Teilbereich Informationen bezüglich des allgemeinen Betriebsmodus des Ein- und Ausgabegerätes umfassen und ein weiterer Teilbereich Informationen in Bezug auf die für diesen Modus relevanten Inhalte. Insofern kann beispielweise ein Teilbereich Informationen enthalten, die von der Steuereinheit in ein Ausgabesignal umgesetzt werden, wohingegen ein weiterer Teilbereich Informationen enthalten kann, welche die Ausgabe des Signals selbst beeinflussen. Insofern kann beispielsweise dieser zweite Teilbereich die Lautstärke des Ausgabesignals beeinflussen. Durch einen zusätzlichen Datenträger kann dann ein einzelner Teilbereich bzw. die sich in Kombination ergebende Information in diesem Teilbereich beeinflusst werden. So kann beispielsweise durch einen weiteren Datenträger, der lediglich den die Lautstärke betreffenden Teilbereich beeinflusst, ausschließlich die Lautstärke des Ausgabesignals verändert werden, ohne dass die Art des Ausgabesignals selbst verändert wird.

Die Erfindung betrifft zudem ein System, umfassend zumindest eine der vorgenannten Ausführungsformen eines Ein- und Ausgabegeräts und zumindest eine der vorgenannten Ausführungsformen eines Sets.

Ein solches System dient zur Überwindung der zuvor dargestellten Nachteile des Standes der Technik.

In einer bevorzugten Ausführungsform können die jeweiligen Identifikationsbereiche der Datenträger unterschiedlicher Sets durch gezielte Anordnung von transparenten Datenpunkten und Datenpunkten der jeweiligen Datenträger so ausgebildet sein, dass bei einer simultanen Verwendung von Datenträgern verschiedener Sets die Kombination der jeweiligen Identifikationsbereiche dieser Datenträger eine Gesamtheit von intransparenten Datenpunkten ergibt, der in der Speichereinheit als Kennzeichnung für eine unzulässige Kombination eine Aktion in Form der Ausgabe eines entsprechenden Warn-Hinweises hinterlegt ist. Hierdurch ist diese Kombination an Datenträgern von dem Ein- und Ausgabegerät als eine für dieses Ein- und Ausgabegerät ungültige Kombination erkennbar.

Dies kann beispielsweise dadurch erfolgen, dass jeder als Lochkarte ausgebildete Datenträger eines Sets lediglich eine einzige Ausstanzung in dem Identifikationsbereich aufweist. Jeder Datenträger eines Sets hat diese Ausstanzung an demselben Datenpunkt des Identifikationsbereichs. Jedes Set hat diese beispielhafte Ausstanzung jedoch an einem eigenen, sich von den anderen Sets unterscheidendem Datenpunkt des Identifikationsbereichs. Die Datenpunkte des Identifikationsbereichs sind bei allen Sets identisch angeordnet, sodass sie sich überlagern, wenn Datenträger aus verschiedenen Sets kombiniert werden. Werden Datenträger aus verschiedenen Sets verwendet, überlagern sich die ausgestanzten und die nicht ausgestanzten Datenpunkte im Identifikationsbereich notwendigerweise derart, dass keine Ausstanzung im Identifikationsbereich von der Sensoreinheit erfasst wird. Wird keine Ausstanzung im Identifikationsbereich von der Sensoreinheit erfasst, müssen Datenträger von verschiedenen Sets miteinander kombiniert worden sein. Es kann anschließend beispielsweise ein Warn-Hinweis ausgegeben werden, welcher als Kennzeichnung für eine unzulässige Kombination in der Speichereinheit hinterlegt ist.

Im Folgenden werden in den Zeichnungen dargestellte Ausführungsbeispiele der Erfindung erläutert. Es zeigen:
- Fig. 1: ein Ausführungsbeispiel eines erfindungsgemäßen Ein- und Ausgabegeräts,
- Fig. 2: ein Ausführungsbeispiel eines Datenträgers,
- Fig. 3a - e: verschiedene Ausführungsbeispiele eines erfindungsgemäßen Systems als Detailausschnitt,
- Fig. 4: ein weiterer Detailausschnitt eines Ausführungsbeispiels eines erfindungsgemäßen Systems und
- Fig. 5: ein weiterer Detailausschnitt eines Ausführungsbeispiels eines erfindungsgemäßen Systems.

In allen Figuren werden für gleiche bzw. gleichartige Bauteile übereinstimmende Bezugszeichen verwendet.

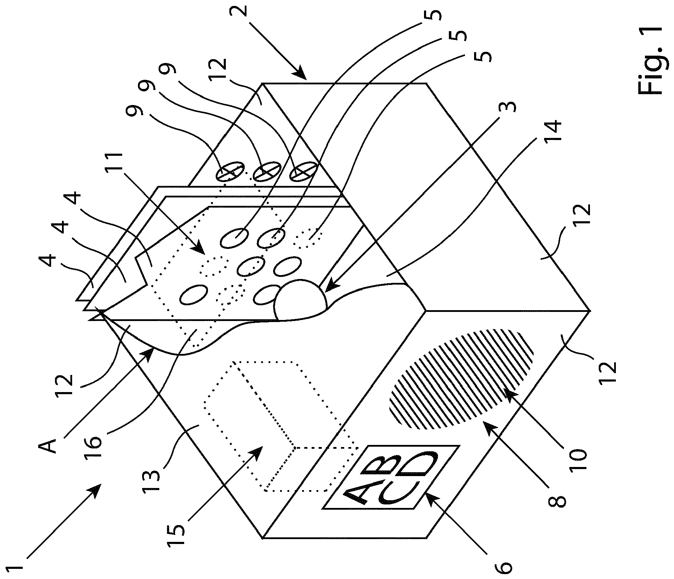

Fig. 1 zeigt ein Ein- und Ausgabegerät 1 mit einem Gehäuse 2. Das Gehäuse 2 umfasst vier Seitenwände 12, eine Oberseite 13 und einen Boden 14. Die Oberseite 13 des Gehäuses 2 ist in Fig. 1 geschnitten dargestellt. Insofern ist die Oberseite 13 rechts der Schnittlinie A nicht dargestellt.

Im Inneren des Gehäuses 2 ist eine Sensoreinheit 3 zum Auslesen von drei hintereinander angeordneten Datenträgern 4 vorgesehen. Die Datenträger 4 sind mit für die Sensoreinheit 3 auslesbaren Informationen in Form von Datenpunkten 5 versehen. Die Datenpunkte 5 haben ein Binärformat und können somit zwei mögliche Ausgestaltungen aufweisen. Sie sind im gezeigten Ausführungsbeispiel entweder ausgestanzt, hier dargestellt durch einen Kreis mit durchgezogener Begrenzungslinie, oder aber nicht ausgestanzt, hier dargestellt durch einen Kreis mit gestrichelter Begrenzungslinie, ausgebildet. Die Datenträger 4 sind als gleichformatige, flache Lochkarten mit einer auf einer Fläche angeordneten Matrix 11 von Datenpunkten 5 ausgebildet und parallel hintereinander angeordnet.

Im Inneren des Gehäuses 2 ist weiterhin eine Steuereinheit 15 vorgesehen, welche mit der Sensoreinheit 3, einer nicht dargestellten Speichereinheit sowie einer optischen Signaleinheit 6 sowie einer, im gezeigten Ausführungsbeispiel als Lautsprecher ausgebildeten, akustischen Signaleinheit 8 verbunden ist. Die optische Signaleinheit 6 ist im gezeigten Ausführungsbeispiel als Bildschirm ausgebildet und befindet sich nach Außen gerichtet in einer Seitenwand 12 des Gehäuses 2. Der Lautsprecher befindet sich hinter einem Gitter 10, das im gezeigten Ausführungsbeispiel neben der optischen Signaleinheit 6 in derselben Seitenwand 12 vorgesehen ist. Alternativ können auch mehrere Lautsprecher an unterschiedlichen Positionen vorgesehen sein, beispielsweise zur Erzielung eines Stereo-Effekt.

Die Lochkarten können durch eine in der Oberseite 13 des Gehäuses 2 angeordnete, in der Zeichnung nicht dargestellte, Datenträgereinführöffnung 16 in das Ein- und Ausgabegerät 1 eingeführt werden. Durch die flächig aneinander anliegende Anordnung der Lochkarten überlagern sich die Datenpunkte 5 dieser Lochkarten genau. Sofern beispielsweise zwei ausgestanzt ausgebildete Datenpunkte 5 überlagert sind, kann die Sensoreinheit 3 die beiden sich überlagernden Datenpunkte 5 auslesen.

Die auf den Lochkarten vorgesehenen Informationen können nach dem Einführen von der Sensoreinheit 3 ausgelesen werden. Insbesondere können aufgrund der Anordnung der Lochkarten die drei Lochkarten gleichzeitig von der Sensoreinheit 3 ausgelesen werden. Hierfür ist die Sensoreinheit 3 auf einer Seite der Lochkarten vorgesehen, wohingegen auf der anderen Seite der Lochkarten mehrere, in der Zeichnung nicht dargestellte, Leuchtmittel 9 vorgesehen sind. Eine Sensoreinheit 3 kann beispielsweise als Lichtsensor ausgebildet sein. Die Leuchtmittel 9 sind als Matrix angeordnet, wobei die einzelnen Leuchtmittel 9 unmittelbar an den Datenpunkten 5 der eingeführten Lochkarten angeordnet sind. Insofern entspricht die Matrix der Leuchtmittel 9 der Matrix 11 der Datenpunkte 5. Die Leuchtmittel 9 können beispielweise einzeln aktivierbar sein, und die Steuereinheit 15 kann zur einzelnen, vorzugsweise sequentiellen Aktivierung der Leuchtmittel 9 ausgebildet sein. Wenn das Licht eines Leuchtmittels 9 durch einen Datenpunkt 5 scheint, wird dies von der als Lichtsensor ausgebildeten Sensoreinheit 3 erkannt. Insofern ist die von der Sensoreinheit 3 erkannte Information diejenige, dass dieser Datenpunkt 5 in jeder Lochkarte ausgestanzt ausgebildet ist. Durch eine sequentielle Aktivierung der Leuchtmittel 9 kann vermieden werden, dass das von einem Leuchtmittel 9 emittierte Licht durch mehrere Datenpunkte 5, also beispielsweise durch mehrere Ausstanzungen, auf die Seite der Sensoreinheit 3 scheint und somit die Auslesbarkeit der Lochkarten beeinträchtigt und/oder ungenauer wird.

Durch die Steuereinheit 15 werden die von der Sensoreinheit 3 erfassten Informationen ausgewertet. Die Informationen werden dabei mit in der nicht dargestellten Speichereinheit hinterlegten Zuordnungen abgeglichen. Eine Zuordnung ist beispielsweise eine Kombination aus einer bestimmten, von der Sensoreinheit 3 erfassten Information betreffend einen Datenpunkt 5 oder mehrere ausgelesene Datenpunkte 5 und einer dieser Information zugeordneten Aktion. Eine Information ist beispielsweise eine Anordnung von Datenpunkten 5 bestimmter Ausgestaltung bzw. bestimmter Ausgestaltungen. Die Steuereinheit 15 vergleicht die von der Sensoreinheit 3 erfassten Informationen mit den in den Zuordnungen hinterlegten Informationen und führt die den jeweiligen erfassten Informationen zugeordnete Aktion(en) aus. Eine solche Aktion kann beispielsweise die Ausgabe eines Tons durch die als Lautsprecher ausgebildete akustische Signaleinheit 8 oder eine Anzeige auf der als Bildschirm ausgebildeten optischen Signaleinheit 6 sein.

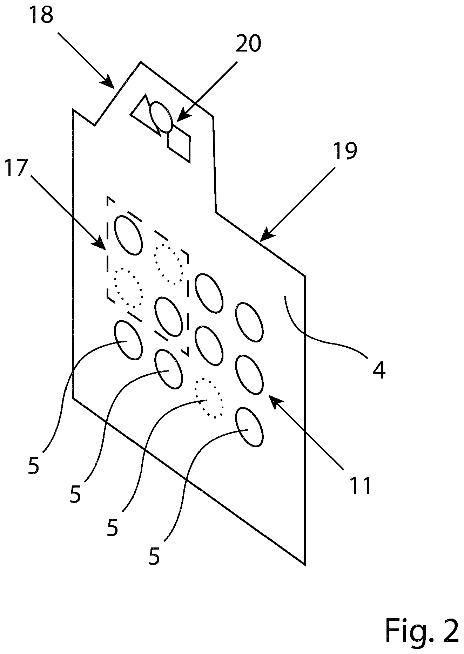

Fig. 2 zeigt beispielhaft einen als flache Lochkarte ausgebildeten Datenträger 4, der mit einer auf seiner Fläche angeordneten Matrix 11 von Datenpunkten 5 ausgebildet ist. Die Datenpunkte 5 haben ein Binärformat, also zwei mögliche Ausgestaltungen. Sie sind entweder ausgestanzt ausgebildet, hier dargestellt durch einen Kreis mit durchgezogener Begrenzungslinie, oder aber nicht ausgestanzt ausgebildet, hier dargestellt durch einen Kreis mit gestrichelter Begrenzungslinie. Insofern sind die Datenträger 4 jeweils mit durch die Sensoreinheit 3 auslesbaren Informationen versehen. Die ausgestanzten Datenpunkte 5 sind für die Sensoreinheit 3 transparent und die nicht ausgestanzten Datenpunkte 5 sind für die Sensoreinheit 3 intransparent.

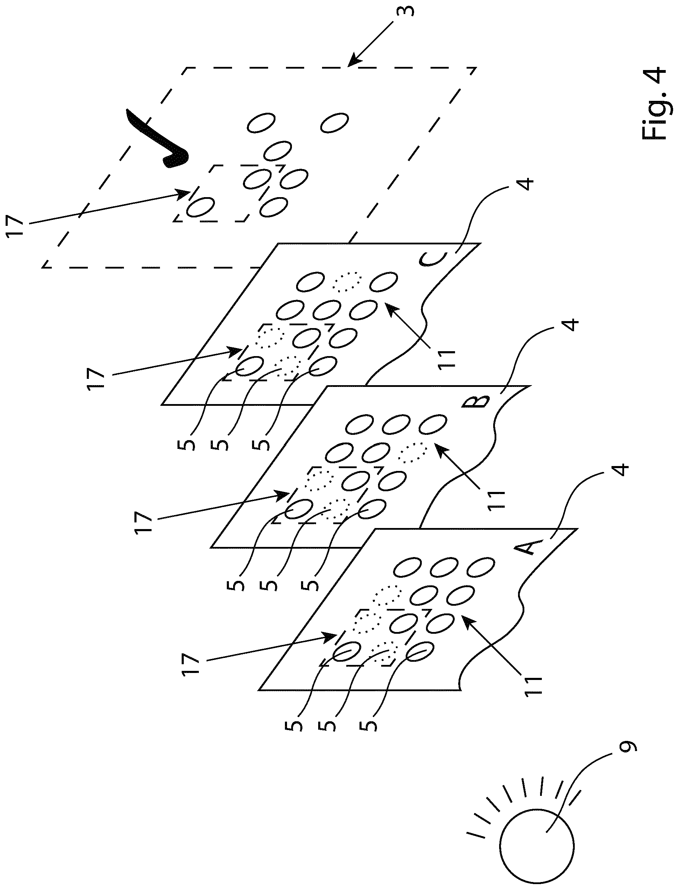

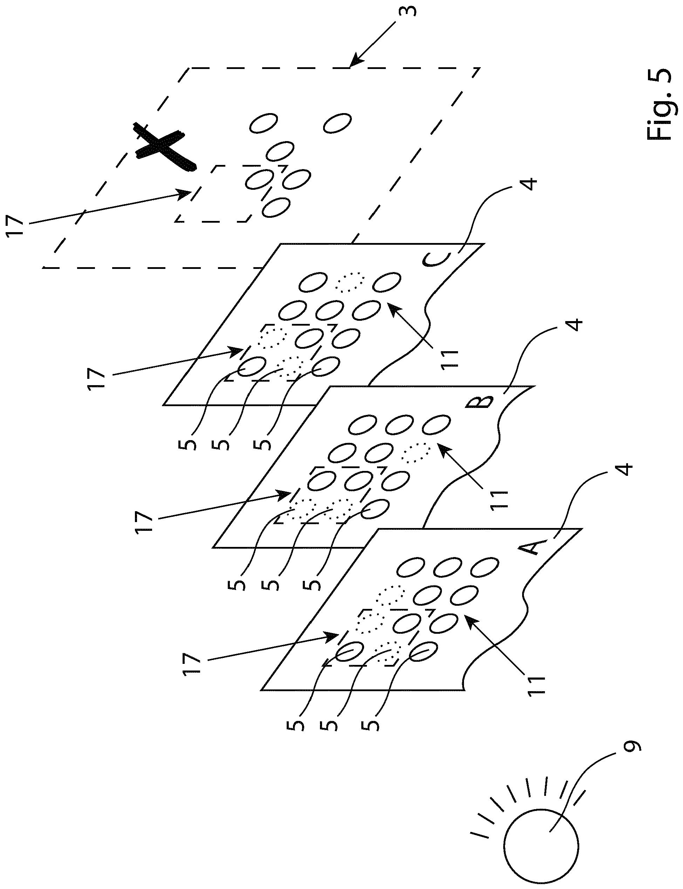

Ein Teilbereich der Gesamtheit der Datenpunkte 5 der Lochkarte ist als Identifikationsbereich 17 ausgebildet. Im Allgemeinen ist der Identifikationsbereich 17 jedes Datenträgers 4 eines Sets identisch ausgebildet. Insofern ist die Zugehörigkeit bzw. Nicht-Zugehörigkeit der einzelnen Datenträger 4 zu einem Set anhand der jeweiligen Identifikationsbereiche 17 detektierbar. Dies wird anhand von Fig. 4 und Fig. 5 noch näher erläutert.

Die Lochkarte ist mit einer Kennzeichnung 18 versehen, welche die durch diese Lochkarte zu steuernde(n) Funktion(en) visualisiert. Die Kennzeichnung 18 ist dabei an einem Kantenbereich vorgesehen und als Vorsprung an derjenigen Außenkontur 19 der Lochkarte ausgebildet, der bei eingeführter Lochkarte außerhalb des Gehäuses 2 des Ein- und Ausgabegerätes 1 befindlich und damit von außen sichtbar ist. Eine solche Kennzeichnung 18 ermöglicht dem jeweiligen Anwender einen schnellen Überblick darüber, welche Datenträger 4 aktuell ausgelesen bzw. gegebenenfalls kombiniert sind bzw. welche zur Verwendung ausgewählt werden sollen. Zu diesem Zwecke ist die Kennzeichnung 18 mit Symbolen 20 bedruckt. Es ist ebenfalls denkbar, dass die Außenkontur 19 einer solchen Kennzeichnung 18 derart ausgestaltet ist, dass sie selbst ein Symbol 20 darstellt.

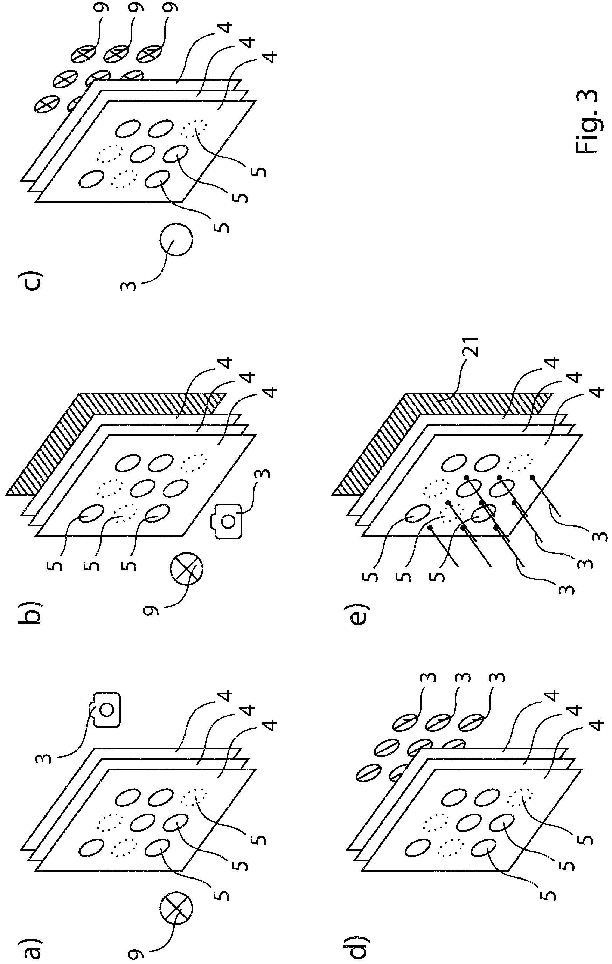

Die Figuren 3a bis 3e zeigen jeweils verschiedene Beispiele von Anordnungen und Ausgestaltungen von Sensoreinheit 3 und Lochkarten, deren Informationen ausgelesen werden sollen.

In Fig. 3a ist auf der einen Seite der Lochkarten ein Leuchtmittel 9 angeordnet und auf der anderen Seite der Lochkarten eine als Kamera ausgebildete Sensoreinheit 3. Das Leuchtmittel 9 strahlt von vorne Licht auf die Lochkarten, wobei das Licht durch die ausgestanzt ausgebildeten Datenpunkte 5 hindurchtritt. Insofern kann die hinter den Lochkarten angeordnete Kamera die Matrix 11 aufnehmen, wobei ausgestanzt ausgebildete Datenpunkte 5 dadurch erkennbar sind, dass sie das Licht des Leuchtmittels 9 durchlassen und insofern heller sind als die übrigen verschlossenen Datenpunkte 5.

In Fig. 3b ist auf der einen Seite der Lochkarten ein Leuchtmittel 9 und eine als Kamera ausgebildete Sensoreinheit 3 angeordnet und auf der anderen Seite der Lochkarten ein dunkler Hintergrund 22. Das Leuchtmittel 9 strahlt Licht auf die Lochkarten, wobei das Licht durch die ausgestanzt ausgebildeten Datenpunkte 5 auf die andere Seite der Lochkarten fällt. Die übrige Oberfläche dieser Seite der Lochkarte, insbesondere die nicht ausgestanzt ausgebildeten Datenpunkte 5, wird durch das Licht des Leuchtmittels 9 erhellt und reflektiert somit das Licht. Insofern kann die Kamera die Matrix 11 aufnehmen, wobei ausgestanzt ausgebildete Datenpunkte 5 dadurch erkennbar sind, dass sie das Licht des Leuchtmittels 9 durchlassen und insofern dunkler sind als die übrigen Datenpunkte 5 und die übrige Oberfläche dieser Seite der Lochkarte.

In Fig. 3c ist auf der einen Seite der Lochkarten eine als Lichtsensor ausgebildete Sensoreinheit 3 angeordnet und auf der anderen Seite der Lochkarten eine Matrix aus Leuchtmitteln 9. Die Matrix aus Leuchtmitteln 9 ist identisch und deckungsgleich zu der Matrix 11 der Datenpunkte 5 angeordnet. Die Leuchtmittel 9 strahlen Licht auf die Lochkarten, wobei das Licht durch die ausgestanzt ausgebildeten Datenpunkte 5 auf die andere Seite der Lochkarten fällt. Insofern kann der Lichtsensor Licht erkennen, das durch die Datenpunkte 5 hindurchtritt, wobei ausgestanzt ausgebildete Datenpunkte 5 dadurch erkennbar sind, dass sie das Licht des Leuchtmittels 9 durchlassen und insofern heller sind als die übrigen nicht ausgestanzten Datenpunkte 5. Die Matrix der Leuchtmittel 9 ist identisch zu der Matrix 11 angeordnet. Die Leuchtmittel 9 können insbesondere sequentiell aktiviert werden. Der zuerst gemessene Wert der Sensoreinheit 3 kann dann beispielsweise mit dem ersten Datenpunkt 5, beispielsweise "oben links" korrespondieren. Der zweite gemessene Wert der Sensoreinheit 3 korrespondiert dann beispielsweise mit einem zweiten Datenpunkt 5, der beispielsweise in derselben Reihe einen Datenpunkt 5 weiter rechts liegen kann. Dieses Verfahren wird sequentiell für alle Datenpunkte 5 der Matrix 11 durchgeführt.

In Fig. 3d ist auf der einen Seite der Lochkarten eine Matrix aus kapazitiv ausgebildeten Sensoreinheiten 3 angeordnet. Die Matrix aus kapazitiv ausgebildeten Sensoreinheiten 3 ist identisch und deckungsgleich zu der Matrix 11 der Datenpunkte 5 angeordnet. Insofern befinden sich die Lochkarten in den von den kapazitiv ausgebildeten Sensoreinheiten 3 aufgebauten elektrischen Feldern. Jede kapazitiv ausgebildete Sensoreinheit 3 ist einem Datenpunkt 5 der Matrix 11 zugeordnet. Die Ausgestaltung der Datenpunkte 5 der Lochkarten in dem jeweiligen elektrischen Feld der kapazitiven Sensoreinheiten 3 können präzise und schnell ausgelesen werden, weil die unterschiedlichen Ausgestaltungen der Datenpunkte 5 sich durch unterschiedliche Materialien im Datenpunkt 5, nämlich dem Material der Lochkarte, sofern ein Datenpunkt 5 nicht ausgestanzt ausgebildet ist, im Vergleich zu keinem Material, sofern ein Datenpunkt 5 ausgestanzt ausgebildet ist, unterscheiden. So wird eine kapazitiv ausgebildete Sensoreinheit 3 einen anderen Wert ausgeben, wenn sich ein nicht ausgestanzt ausgebildeter Datenpunkt 5 in dem von ihr aufgebauten elektrischen Feld befindet, als wenn sich ein ausgestanzt ausgebildeter Datenpunkt 5 in dem von ihr aufgebauten elektrischen Feld befindet.

In Fig. 3e ist auf der einen Seite der Lochkarten eine Matrix aus als mechanische Tastfinger ausgebildeten Sensoreinheiten 3 angeordnet. Die Matrix aus als mechanische Tastfinger ausgebildeten Sensoreinheiten 3 ist identisch und deckungsgleich zu der Matrix 11 der Datenpunkte 5 angeordnet. Jede Sensoreinheit 3 ist einem Datenpunkt 5 der Matrix 11 zugeordnet. Eine als mechanische Tastfinger ausgebildete Sensoreinheit 3 kann nach Aktivierung auf einen Datenpunkt 5 hinbewegt werden. Sofern ein Datenpunkt 5 nicht ausgestanzt ausgebildet ist, berührt der entsprechende mechanische Tastfinger die entsprechende Lochkarte und fährt wieder in seine Ausgangsposition zurück. Sofern ein Datenpunkt 5 ausgestanzt ausgebildet ist, fährt der entsprechende mechanische Tastfinger durch die entsprechende Lochkarte und berührt auf der anderen Seite der Lochkarten ein elektrisch leitfähiges Material 21, welches dort vorgesehen ist. Durch diese Berührung wird der Stromkreis des entsprechenden mechanischen Tastfingers geschlossen, so dass hierdurch die Information erfasst wird, dass der entsprechende Datenpunkt 5 in allen hintereinander vorgesehenen Lochkarten ausgestanzt ausgebildet ist.

Fig. 4 und Fig. 5 zeigen jeweils eine Anordnung von drei Datenträgern 4 sowie die von der Sensoreinheit 3 ausgelesenen Informationen, die aus der Kombination dieser drei Datenträger 4 hervorgehen.

Die Datenträger 4 sind als gleichformatige, flache Lochkarten mit jeweils einer auf einer Fläche angeordneten Matrix 11 von Datenpunkten 5 ausgebildet. Die Datenpunkte 5 haben ein Binärformat, also zwei mögliche Ausgestaltungen. Sie sind entweder ausgestanzt, hier dargestellt durch einen Kreis mit durchgezogener Begrenzungslinie, oder aber nicht ausgestanzt, hier dargestellt durch einen Kreis mit gestrichelter Begrenzungslinie ausgebildet. Insofern sind die Datenträger 4 jeweils mit durch die Sensoreinheit 3 auslesbaren Informationen versehen und weisen für die Sensoreinheit 3 transparente und intransparente Bereiche auf. Die Sensoreinheit 3 kann beispielsweise einer für die Sensoreinheit 3 transparenten Ausgestaltung den Wert "1" zuweisen, wohingegen die Sensoreinheit 3 einer für die Sensoreinheit 3 intransparenten Ausgestaltung den Wert "0" zuweisen kann.

Die Anordnung der Datenträger 4 ist in den Fig. 4 und 5 in einer Explosionsdarstellung abgebildet, die einen Abstand zwischen den Datenträgern 4 zeigt. Während des erfindungsgemäßen Gebrauchs, also insbesondere während die Datenträger 4 in das Ein- und Ausgabegerät 1 eingeführt sind, sind diese jedoch, abweichend von der Darstellung in den Fig. 4 und 5, flächig und deckungsgleich direkt hintereinander angeordnet, sodass die Datenpunkte 5 dieser Datenträger 4 sich genau überlagern und dadurch die auf den Datenträgern 4 hinterlegten Informationen von der Sensoreinheit 3 auslesbar sind. Durch die dargestellte Anordnung können die drei Datenträger 4 miteinander kombiniert werden, um unterschiedliche Informationen einzugeben.

Auf der Sensoreinheit 3 wird eine Matrix 11 an Datenpunkten 5 abgebildet, die grundlegend der Matrix 11 der Datenpunkte 5 der Datenträger 4 entspricht. Im gezeigten Ausführungsbeispiel weisen die Datenträger 4 jeweils vier nebeneinander angeordnete Spalten mit jeweils drei untereinander angeordneten Datenpunkten 5 auf. Auf der linken Seite der Fig. 4 und 5 ist ein Leuchtmittel 9 angeordnet, das einen Lichtschein durch die transparent ausgestalteten, also als Ausstanzungen ausgebildeten, Datenpunkte 5 wirft. Das nicht abgebildete Gehäuse 2 des Ein- und Ausgabegeräts 1 kann in diesem Fall vollkommen lichtdicht ausgebildet sein. Ein ausgestanzter Datenpunkt 5 eines Datenträgers 4 ist für die Sensoreinheit 3 transparent und wird insofern als heller Punkt auf der ansonsten dunklen Sensoreinheit 3 abgebildet. Diesem Punkt würde insofern der Wert "1" zugewiesen. Ein nicht ausgestanzter Datenpunkt 5 ist für die Sensoreinheit 3 intransparent und wird insofern nicht auf der Sensoreinheit 3 abgebildet. Dieser "Leerstelle" wird insofern der Wert "0" zugewiesen.

Prinzipiell kann die Anordnung des Leuchtmittels 9 und der Sensoreinheit 3 auch derart ausgestaltet sein, dass Leuchtmittel 9 und Sensoreinheit 3 auf derselben Seite liegen und das Leuchtmittel 9 die Datenträger 4 von der Seite der Sensoreinheit 3 anstrahlt. Eine derartige Ausgestaltung ist beispielsweise in Fig. 3b gezeigt. Ein ausgestanzter Datenpunkt 5 eines Datenträgers 4 ist für die Sensoreinheit 3 transparent und wird insofern als dunkles Loch auf dem ansonsten hellen Datenträger 4 abgebildet. Diesem dunklen Loch würde insofern der Wert "1" zugewiesen. Ein nicht ausgestanzter Datenpunkt 5 ist für die Sensoreinheit 3 intransparent und wird insofern als "Leerstelle", beziehungsweise als helle Fläche, auf der im Übrigen hellen Fläche des Datenträgers 4 abgebildet. Dieser "Leerstelle" wird insofern der Wert "0" zugewiesen.

Sofern drei Ausstanzungen überlagert sind, kann eine Sensoreinheit 3 die drei sich überlagernden Datenpunkte 5 insgesamt als ausgestanzt auslesen. Da alle drei Datenpunkte 5 als Ausstanzung ausgebildet und daher für die Sensoreinheit 3 transparent sind, wird der Datenpunkt 5 in der Matrix 11 als Punkt auf der Sensoreinheit 3 abgebildet. Dies ist beispielsweise bei dem unteren rechten Datenpunkt 5 der Fall. Diesem Datenpunkt 5 wird also der Wert "1" zugewiesen. Ist jedoch einer der sich überlagernden Datenpunkte 5 in zumindest einem der Datenträger 4 nicht ausgestanzt ausgebildet und deshalb für die Sensoreinheit 3 nicht transparent, so wird dieser Datenpunkt 5 der Matrix 11 auch nicht auf der Sensoreinheit 3 abgebildet. Dies ist beispielsweise bei dem ganz rechts angeordneten Datenpunkt 5 der zweiten Zeile der Fall. Diesem Datenpunkt 5 wird also der Wert "0" zugewiesen. Auf diese Weise können die Informationen verschiedener Datenträger 4 kombiniert werden. Mit wenigen verschiedenen Datenträgern 4 kann so eine Vielzahl an möglichen Informationen abgebildet werden.

In Fig. 4 sind drei Datenträger 4 eines Sets von Datenträgern 4 gezeigt. Ein Teilbereich der Gesamtheit der Datenpunkte 5 jedes Datenträgers 4, gekennzeichnet durch einen quadratischen Rahmen oben links in der jeweiligen Matrix 11, ist als Identifikationsbereich 17 vorgesehen. Dieser Teilbereich umfasst im gezeigten Ausführungsbeispiel insgesamt vier Datenpunkte 5, die in zwei untereinander vorgesehenen Zeilen mit jeweils zwei Datenpunkten 5 angeordnet sind. Der Identifikationsbereich 17 jedes Datenträgers 4 dieses Sets ist identisch ausgebildet, das heißt die Datenpunkte 5 innerhalb der Identifikationsbereiche 17 sind identisch ausgebildet, so dass die Zugehörigkeit bzw. Nicht-Zugehörigkeit der einzelnen Datenträger 4 zu diesem Set detektierbar ist. Vorliegend sind die Datenträger 4 dieses Sets beziehungsweise der Identifikationsbereich 17 der Datenträger 4 dieses Sets dadurch gekennzeichnet, dass der linke Datenpunkt 5 der oberen Zeile und der rechte Datenpunkt 5 der unteren Zeile des Identifikationsbereichs 17 jeweils ausgestanzt und die beiden übrigen Datenpunkte 5 nicht ausgestanzt ausgebildet sind. Auf der Sensoreinheit 3 ergibt sich entsprechend eine Information für den Identifikationsbereich 17, die aus zwei Punkten an der Stelle der ausgestanzt ausgebildeten Datenpunkte 5, also "oben links" und "unten rechts", besteht.

Um zu detektieren, ob Datenträger 4 von verschiedenen Sets eingesetzt sind, kann beispielsweise folgender Abgleich durch die hier nicht dargestellte Steuereinheit durchgeführt werden: alle Datenträger 4 der einzusetzenden Sets haben in diesem System in ihrem Identifikationsbereich 17 jeweils zwei ausgestanzt und zwei nicht ausgestanzt ausgebildete Datenpunkte 5 an der jeweils gleichen Position. Es gibt insofern bei der 2x2-Matrix 11 des abgebildeten Identifikationsbereichs 17 die Möglichkeit, sechs verschiedene Sets zu unterscheiden. Sind Datenträger 4 aus demselben Set in das Ein- und Auslesegerät 1 eingeführt, sind immer genau nur zwei Datenpunkte 5, also zwei Mal der Wert "1", im Identifikationsbereich 17 auf der Sensoreinheit 3 abgebildet. In entsprechender Weise kann auch bei einem Identifikationsbereich mit einer abweichenden Matrix verfahren werden.

Wenn weniger als zwei Datenpunkte 5, also weniger als zwei Mal der Wert "1", und somit nur ein Datenpunkt 5 im Identifikationsbereich 17 auf der Sensoreinheit 3 abgebildet wird, sind dementsprechend unzulässigerweise Datenträger 4 von verschiedenen Sets kombiniert. Hierdurch ist diese Kombination an Datenträgern 4 von dem Ein- und Ausgabegerät 1 als eine für dieses Ein- und Ausgabegerät 1 ungültige Kombination in einfacher Weise erkennbar.

In Fig. 5 sind ebenfalls drei Datenträger 4 abgebildet, die grundlegend den gleichen Identifikationsbereich 17, also eine 2x2-Matrix im oberen, linken Bereich der Matrix 11, wie die Datenträger 4 in Fig. 4 aufweisen. Vorliegend sind jedoch weniger als zwei Datenpunkte 5 im Identifikationsbereich 17 auf der Sensoreinheit 3 abgebildet, nämlich nur ein Datenpunkt 5 rechts unten im Identifikationsbereich 17. Es müssen insofern nach dem zuvor beispielhaft erklärten System unzulässigerweise Datenträger 4 von verschiedenen Sets kombiniert sein.

Der in Fig. 5 zuvorderst angeordnete, also links dargestellte, Datenträger 4 und der in Fig. 5 zuhinterst angeordnete, also rechts dargestellte, Datenträger 4 weisen jeweils einen identisch ausgestalteten Identifikationsbereich 17 auf, wobei die Datenpunkte 5 "oben links" und "unten rechts" ausgestanzt ausgebildet sind. Der mittlere Datenträger 4 hingegen weist einen hiervon abweichenden Identifikationsbereich 17 auf, bei welchem die Datenpunkte 5 "oben rechts" und "unten rechts" ausgestanzt ausgebildet sind.

Auf der Sensoreinheit 3 ist im Identifikationsbereich 17 insofern nur ein Datenpunkt 5 abgebildet, also nur einmal der Wert "1", weil sich der nicht ausgestanzt ausgebildete Datenpunkt 5 "oben links" des mittleren Datenträgers 4 mit dem ausgestanzt ausgebildeten Datenpunkt 5 "oben links" der beiden anderen Datenträger 4 überlagert. Insofern ist diese Kombination an Datenträgern 4 von dem Ein- und Ausgabegerät 1 als eine für dieses Ein- und Ausgabegerät 1 ungültige Kombination von Datenträgern 4 aus verschiedenen Sets erkennbar.

## Patentansprüche

1. Ein- und Ausgabegerät (1), umfassend ein Gehäuse (2), in dem zumindest eine elektronische Sensoreinheit (3), eine elektronische Steuereinheit (15), eine Speichereinheit und wenigstens eine Ausgabeeinheit vorgesehen sind, wobei die Sensoreinheit (3) zum Auslesen von wenigstens zwei hintereinander angeordneten Datenträgern (4) ausgebildet ist, wobei jeder Datenträger (4) mit durch die Sensoreinheit (3) auslesbaren Informationen im Binärformat versehen ist und insoweit sowohl für den Sensor transparente Bereiche als auch für den Sensor intransparente Bereiche aufweist, und wobei die Steuereinheit (15) mit der Sensoreinheit (3), der Speichereinheit und der Ausgabeeinheit verbunden ist, wobei weiterhin in der Speichereinheit zumindest Zuordnungen von durch die Sensoreinheit (3) erfassbaren Informationen und damit verknüpften Aktionen hinterlegt sind, wobei weiterhin die Steuereinheit (15) zumindest zum Empfang und zur Auswertung der von der Sensoreinheit (3) erfassten Informationen unter Berücksichtigung der in der Speichereinheit hinterlegten Zuordnungen ausgebildet ist, und wobei die Ausgabeeinheit zur Tätigung einer Ausgabe entsprechend der in der Speichereinheit für die von der Sensoreinheit (3) erfassten Informationen hinterlegten Aktion ausgebildet ist, und die Steuereinheit (15) zur Steuerung der Ausgabe durch die Ausgabeeinheit ausgebildet ist, wobei weiterhin das Gehäuse (2) wenigstens eine derart ausgebildete Datenträgereinführöffnung (16) aufweist, dass durch die Datenträgereinführöffnung (16) hindurch wenigstens zwei Datenträger (4) zumindest partiell so in das Gehäuse (2) einführbar sind, dass diese flächig hintereinander angeordnet sind und die darauf hinterlegten Informationen von der Sensoreinheit (3) auslesbar sind.

2. Ein- und Ausgabegerät (1) nach dem vorhergehenden Anspruch, **dadurch gekennzeichnet, dass** die Ausgabeeinheit zumindest eine mit der Steuereinheit (15) verbundene optische Signaleinheit (6) umfasst, die vorzugsweise durch eine LED oder eine elektronische Anzeige wie ein LCD- oder LED-Display gebildet ist, wobei zumindest eine in der Speichereinheit hinterlegte Aktion ein durch die Signaleinheit(en) (6) auszugebendes optisches Signal umfasst.

3. Ein- und Ausgabegerät (1) nach einem der vorhergehenden Ansprüche, **dadurch gekennzeichnet, dass** die Ausgabeeinheit zumindest eine mit der Steuereinheit (15) verbundene akustische Signaleinheit (8), die vorzugsweise durch einen Lautsprecher gebildet ist, umfasst, wobei zumindest eine in der Speichereinheit hinterlegte Aktion ein durch die Signaleinheit(en) (8) auszugebendes akustisches Signal umfasst.

4. Ein- und Ausgabegerät (1) nach einem der vorhergehenden Ansprüche, **dadurch gekennzeichnet, dass** die Sensoreinheit (3) wenigstens eine elektronische optische Erfassungseinheit, beispielsweise eine elektronische Kamera, umfasst.

5. Ein- und Ausgabegerät (1) nach einem der vorhergehenden Ansprüche, **dadurch gekennzeichnet, dass** das Gehäuse (2) derart abgedunkelt, vorzugsweise lichtdicht abgeschlossen, ist, dass zumindest in den Bereich, in dem die Sensoreinheit (3) die Informationen erfasst, kaum oder gar kein von außerhalb des Gehäuses (2) in das Innere des Gehäuses (2) eingedrungenes Licht vorhanden ist.

6. Ein- und Ausgabegerät (1) nach einem der vorhergehenden Ansprüche, **dadurch gekennzeichnet, dass** die Sensoreinheit (3) zumindest ein elektrisches, vorzugsweise als LED ausgebildetes, Leuchtmittel (9) umfasst.

7. Ein- und Ausgabegerät (1) nach dem vorhergehenden Anspruch, **dadurch gekennzeichnet, dass** zumindest ein elektrisches Leuchtmittel (9) so angeordnet ist, dass sämtliche durch die Datenträgereinführöffnung (16) bzw. die Datenträgereinführöffnungen (16) zumindest partiell in das Gehäuse (2) eingeführten Datenträger (4) jeweils zwischen diesem zumindest einem Leuchtmittel (9) und zumindest einer elektronischen optischen Erfassungseinheit angeordnet sind.

8. Ein- und Ausgabegerät (1) nach dem vorhergehenden Anspruch, **dadurch gekennzeichnet, dass** mehrere Leuchtmittel (9) vorgesehen sind, die einzeln aktivierbar sind, und dass die Steuereinheit (15) zur einzelnen, vorzugsweise sequentiellen Aktivierung der Leuchtmittel (9) ausgebildet ist.

9. Ein- und Ausgabegerät (1) nach einem der vorhergehenden Ansprüche, **dadurch gekennzeichnet, dass** die Sensoreinheit (3) wenigstens einen ein elektrisches Feld aufbauenden kapazitiven Sensor umfasst.

10. Ein- und Ausgabegerät (1) nach einem der vorhergehenden Ansprüche, **dadurch gekennzeichnet, dass** die Sensoreinheit (3) wenigstens einen ein elektrisches Feld aufbauenden kapazitiven Sensor umfasst, wobei wenigstens ein kapazitiver Sensor so angeordnet ist, dass sich zumindest ein durch die Öffnung bzw. die Öffnungen zumindest partiell in das Gehäuse (2) eingeführter Datenträger (4), vorzugsweise zumindest zwei durch die Öffnung bzw. die Öffnungen zumindest partiell in das Gehäuse (2) eingeführte Datenträger (4) und ganz bevorzugt sämtliche durch die Öffnung bzw. die Öffnungen zumindest partiell in das Gehäuse (2) eingeführte Datenträger (4), in dem von diesem kapazitiven Sensor aufgebauten elektrischen Feld befindet bzw. befinden.

11. Set mit mehreren durch eine Sensoreinheit (3) auslesbaren, vorzugsweise optisch auslesbaren, vorteilhafterweise gleichformatigen, flächigen Datenträgern (4), vorzugsweise rechteckig mit zwei Längskanten und zwei Querkanten ausgebildeten Lochkarten oder transparenten Karten mit partiellem Aufdruck, **dadurch gekennzeichnet, dass** die Datenträger (4) jeweils eine Vielzahl an jeweils an identischen Positionen angeordneten Datenpunkten (5) aufweisen, die gegenüber dem Rest des Datenträgers (4) von einer Sensoreinheit (3) detektierbar sind, so dass zumindest zwei Datenträger (4) hintereinander angeordnet werden können und durch die nicht als Datenpunkt (5) ausgebildeten Bereiche einer ersten Karte hindurch die jeweils als Datenpunkt (5) ausgebildeten Bereiche einer hinter dieser ersten Karte deckungsgleich vorgesehenen weiteren Karte detektierbar sind, wobei die Datenträger (4) des Sets zur Verwendung mit einem Ein- und Ausgabegerät (1) nach einem der vorhergehenden Ansprüche ausgebildet sind.

12. Set nach dem vorhergehenden Anspruch, **dadurch gekennzeichnet, dass** ein Teilbereich der Gesamtheit der Datenpunkte (5) jedes Datenträgers (4) als Identifikationsbereich (17) ausgebildet ist, wobei der Identifikationsbereich (17) jedes Datenträgers (4) dieses Sets identisch ausgebildet ist, so dass die Zugehörigkeit bzw. Nicht-Zugehörigkeit der einzelnen Datenträger (4) zu einem Set detektierbar ist.

13. Set nach einem der Ansprüche 11 oder 12, **dadurch gekennzeichnet, dass** die Datenpunkte (5) in zwei oder mehr nebeneinander angeordneten Spalten und/oder in zwei oder mehr untereinander angeordneten Reihen vorgesehen sind.

14. Set nach einem der Ansprüche 11 bis 13, **dadurch gekennzeichnet, dass** die Datenpunkte (5) als transparente Bereiche, vorzugsweise Löcher, in einem ansonsten intransparenten Datenträger (4) ausgebildet sind oder als intransparente, vorzugsweise durch Bedruckung gebildete, Bereiche auf einem ansonsten transparenten Datenträger (4) ausgebildet sind.

15. Set nach einem der Ansprüche 11 bis 14, **dadurch gekennzeichnet, dass** die Datenträger (4) jeweils mit zumindest einer Kennzeichnung (18) versehen sind, welche die durch diesen Datenträger (4) zu steuernde(n) Funktion(en) und/oder dessen hinterlegte(n) Information(en) visualisieren, wobei die Kennzeichnung (18) vorzugsweise an einem Kantenbereich vorgesehen ist.

16. Set nach einem der Ansprüche 11 bis 15, **dadurch gekennzeichnet, dass** die Gesamtheit der Datenpunkte (5) in verschiedene Teilbereiche aufgeteilt ist, die jeweils der Steuerung unterschiedlicher Funktionen zugeordnet sind, wobei vorzugsweise jeder Datenträger (4) lediglich eine einzige Funktion oder aber mehrere miteinander zusammenhängende Funktionen steuert.

17. System, umfassend zumindest ein Ein- und Ausgabegerät (1) nach einem der Ansprüche 1 bis 10 und zumindest ein Set nach einem der Ansprüche 11 bis 16.

18. System nach dem vorhergehenden Anspruch, soweit auf Anspruch 12 rückbezogen, **dadurch gekennzeichnet, dass** die jeweiligen Identifikationsbereiche (17) der Datenträger (4) unterschiedlicher Sets durch gezielte Anordnung von transparenten Datenpunkten (5) und Datenpunkte (5) der jeweiligen Datenträger (4) so ausgebildet sind, dass bei einer simultanen Verwendung von Datenträgern (4) verschiedener Sets die Kombination der jeweiligen Identifikationsbereiche (17) dieser Datenträger (4) eine Gesamtheit von intransparenten Datenpunkten (5) ergibt, der in der Speichereinheit als Kennzeichnung für eine unzulässige Kombination eine Aktion in Form der Ausgabe eines entsprechenden Warn-Hinweises hinterlegt ist.
